(19) Europäisches Patentamt
European Patent Office
Office européen des brevets

(11) **EP 4 467 486 A1**

(12) **EUROPEAN PATENT APPLICATION**
published in accordance with Art. 153(4) EPC

(43) Date of publication:
**27.11.2024  Bulletin 2024/48**

(21) Application number: **23743351.1**

(22) Date of filing: **20.01.2023**

(51) International Patent Classification (IPC):
**B65G 1/00** *(2006.01)*    **B65G 1/10** *(2006.01)*
**B65G 1/137** *(2006.01)*

(52) Cooperative Patent Classification (CPC):
**B65G 1/00; B65G 1/10; B65G 1/137**

(86) International application number:
**PCT/JP2023/001738**

(87) International publication number:
**WO 2023/140359 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.01.2022  JP 2022007948**

(71) Applicants:
• **Kabushiki Kaisha Toshiba**
**Tokyo 105-0023 (JP)**

• **TOSHIBA INFRASTRUCTURE SYSTEMS &
SOLUTIONS CORPORATION**
**Saiwai-ku
Kawasaki-shi
Kanagawa 212-0013 (JP)**

(72) Inventors:
• **KOJIMA, Hidetaka**
**Kawasaki-shi, Kanagawa 212-0013 (JP)**
• **AKAGI, Takuma**
**Kawasaki-shi, Kanagawa 212-0013 (JP)**

(74) Representative: **Horn Kleimann Waitzhofer
Schmid-Dreyer
Patent- und Rechtsanwälte PartG mbB
Theresienhöhe 12
80339 München (DE)**

(54) **CONVEYANCE CONTROL DEVICE, WAREHOUSE MANAGEMENT SYSTEM, CONVEYANCE
CONTROL METHOD, PROGRAM, AND COMPUTER-READABLE STORAGE MEDIUM**

(57)    A conveyance control apparatus according to an embodiment includes a memory and a processor. The memory stores management information including article identification information identifying articles and storage destination identification information identifying storage destinations of the articles. The processor outputs, if a storage destination of a first article corresponding to first article identification information included in the order is a predetermined movable rack corresponding to first storage destination identification information, a first conveyance instruction to convey the predetermined movable rack, and outputs, if a storage destination of a second article corresponding to second article identification information included in the order is a predetermined case corresponding to second storage destination identification information, the second conveyance instruction to convey the predetermined case, based on the order and the management information.

F I G. 7

## Description

### FIELD

Embodiments described herein relate generally to a conveyance control apparatus, a warehouse management system, a conveyance control method, a program, and a computer-readable storage medium.

### BACKGROUND

### BACKGROUND OF THE INVENTION

In recent years, an amount of articles, such as goods, being handled at the delivery base of physical distribution is increasing, and various optimizations are attempted relating to sorting or conveyance of articles. As one of such optimizations, introduction of automated guided vehicles (AGV) is being advanced. automated guided vehicles automatically convey movable racks storing articles. For example, automated guided vehicles slip under racks storing articles, lift the racks, and convey the articles together with the racks to target positions.

### CITATION LIST

### PATENT LITERATURE

Patent Literature 1: Japanese Patent No. 6961774

### SUMMARY

### TECHNICAL PROBLEM

For example, the movable racks have a height of approximately 2.5 m, but the height of the ceiling of the warehouse serving as the delivery base of physical distribution is sometimes several meters higher than the height of the movable racks. Because the movable racks are used based on the premise that they are handled by work by workers, the height of the racks has a limit, and a vacant space may be generated above the movable racks in the warehouse. Such cases cause deterioration of the storage efficiency of articles for the capacity of the warehouse, and there is a demand for techniques for improving the storage efficiency.

For example, possible one of such techniques is to reconsider the layout of the warehouse to enable arrangement of storage cases and the like in the space above the movable racks and store the articles in the movable racks and the storage cases. In such cases, the articles are stored in a plurality of types of storage members, such as the movable racks and the storage cases.

An object of the present invention is to provide a conveyance control apparatus, a warehouse management system, a conveyance control method, a program, and a computer-readable storage medium to properly convey ordered articles in a warehouse storing articles in a plurality of types of storage members.

### SOLUTION TO PROBLEM

A conveyance control apparatus according to an embodiment includes a memory and a processor. The memory stores management information including article identification information identifying articles and storage destination identification information identifying storage destinations of the articles. The processor outputs, if a storage destination of a first article corresponding to first article identification information included in the order is a predetermined movable rack corresponding to first storage destination identification information, a first conveyance instruction to convey the predetermined movable rack, and outputs, if a storage destination of a second article corresponding to second article identification information included in the order is a predetermined case corresponding to second storage destination identification information, the second conveyance instruction to convey the predetermined case, based on the order and the management information.

### BRIEF DESCRIPTION OF THE DRAWINGS

FIG. 1 is a conceptual diagram illustrating an example of a warehouse management system according to an embodiment.

FIG. 2 is a front view illustrating an example of arrangement of a storage rack, movable racks, and cases according to an embodiment.

FIG. 3 is a side view illustrating an example of arrangement of the storage racks, the movable racks, and the cases according to an embodiment.

FIG. 4 is a front view illustrating an example of the movable rack according to an embodiment.

FIG. 5 is a top view of the case according to an embodiment.

FIG. 6 is a block diagram illustrating an example of a conveyance control system according to an embodiment.

FIG. 7 is a block diagram illustrating an example of a conveyance control apparatus according to an embodiment.

FIG. 8 is a block diagram illustrating an example of an automated guided vehicle control apparatus according to an embodiment.

FIG. 9 is a block diagram illustrating an automated guided vehicle according to an embodiment.

FIG. 10 is a block diagram illustrating an example of a case transfer unit control apparatus according to an embodiment.

FIG. 11 is a perspective view illustrating an example of a case transfer unit according to an embodiment.

FIG. 12 is a block diagram illustrating an example of a case transfer unit according to an embodiment.

FIG. 13 is a diagram illustrating an example of a layout of picking stations handling both the movable racks and the cases according to an embodiment.

FIG. 14 is a diagram illustrating an example of picking stations handling the movable racks and the cases separately according to an embodiment.

FIG. 15 is a diagram illustrating an example of an order list (carry-out order list or carry-in order list) according to an embodiment.

FIG. 16 is a flowchart illustrating an example of conveyance control executed by a conveyance control apparatus according to an embodiment.

FIG. 17 is a diagram illustrating an example of optimization of article storage according to an embodiment.

FIG. 18 is a flowchart illustrating an example of optimization processing of article storage according to an embodiment.

FIG. 19 is a diagram illustrating an example of a first cluster (mass) formed of the same SKU according to an embodiment.

FIG. 20 is a diagram illustrating an example of a second cluster (mass) pickable from the same movable rack or case according to an embodiment.

DETAILED DESCRIPTION

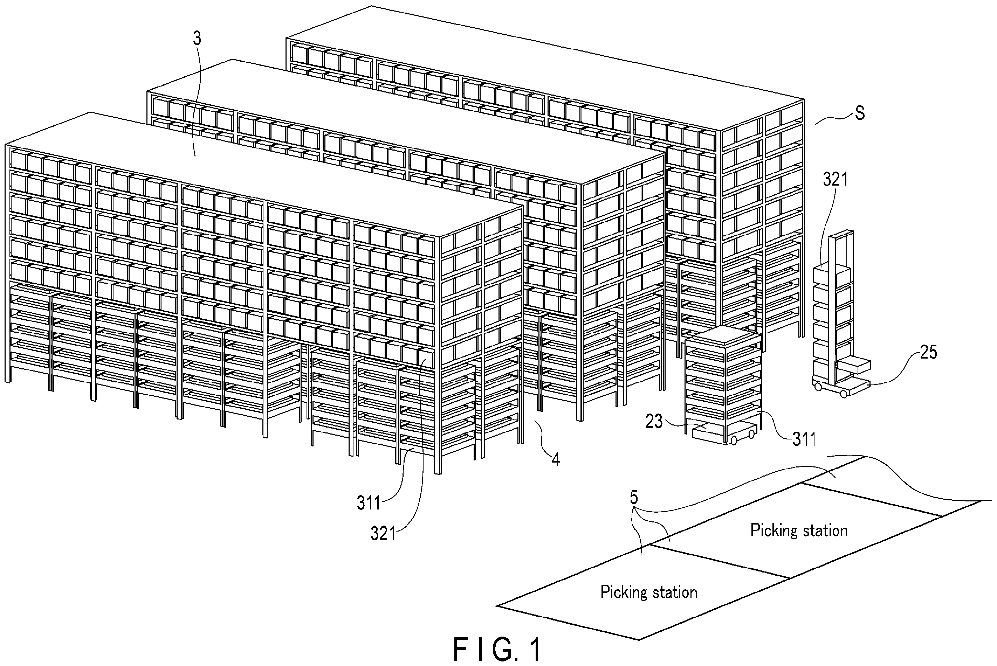

FIG. 1 is a conceptual diagram illustrating an example of a warehouse management system according to an embodiment.

As illustrated in FIG. 1, a warehouse management system S includes a conveyance control system described later, and further includes a plurality of storage racks 3, a plurality of movable racks 311, a plurality of cases 321, and a plurality of picking stations 5. The warehouse management system S stores articles in a plurality of types of storage members, such as the movable racks 311 and the cases 321.

Although the configuration of the conveyance control system will be described later, the conveyance control system includes an automated guided vehicle (AGV) 23 conveying the movable rack 311 and a case (container) transfer unit (CTU) 25 conveying the cases 321, controls conveyance of the movable rack 311 with the automated guided vehicle 23, and controls conveyance of the cases 321 with the case transfer unit 25. Totes or trays may be used instead of the cases 321, or totes or trays may be used together with the cases 321. The cases 321 may be cardboard boxes.

As illustrated in FIG. 1, each of the storage racks 3 is a rack with a plurality of layers enabling arrangement of a plurality of movable racks 311 and a plurality of cases 321 in a vertical direction (perpendicular direction). With each of the storage racks 3, a plurality of movable racks 311 are arranged on the floor surface of the warehouse, and a plurality of cases 321 are arranged in the space above the movable racks 311. The storage racks 3 utilize an upper space of the warehouse, and contribute to achievement of high article accumulation rate. A conveyance control system 2 causes the automated guided vehicle 23 conveying the movable rack 311 and the case transfer unit 25 conveying the cases 321 in a mixer manner. The automated guided vehicle 23 conveys the movable rack 311 between the storage rack 3 and the picking station 5 to carry out or carry in the articles stored in the movable rack 311. The case transfer unit 25 conveys the cases 321 between the storage rack 3 and the picking station 5 to carry out or carry in the articles stored in the case 321.

For example, each of the movable racks 311 stores one or a plurality of articles having a size less than a first size. Each of the cases 321 stores one or a plurality of articles having a size less than a second size. The first size is larger than the second size. Specifically, the maximum size of the article(s) that can be stored in the movable rack 311 is larger than the maximum size of the article(s) that can be stored in the case 321. For example, the size is a total value of three sides of the article. In addition, each of the movable racks 311 stores one or a plurality of articles having weight less than a first total weight. Each of the cases 321 stores one or a plurality of articles having weight less than a second total weight. The first total weight is heavier than the second total weight. Specifically, the total weight of the article(s) that can be stored in the movable rack 311 is heavier than the total weight of the article(s) that can be stored in the case 321.

Accordingly, according to the size of the article(s), the movable rack 311 or the case 321 is selected as a storage destination of the article(s). In addition, according to the weight of the article(s), the movable rack 311 or the case 321 is selected as the storage destination of the article(s). In addition, the frequency of appearance of the article(s), the movable rack 311 or the case 321 is selected as the storage destination of the article(s). For example, the movable rack 311 may be selected as the storage destination of the article(s) with the high frequency of appearance, and the case 321 may be selected as the storage destination of the article(s) with the low frequency of appearance. The frequency of appearance is calculated from an order list described later. In addition, the frequency of appearance means frequency of picking (frequency of shipping) of the single article or the frequency of picking (frequency of shipping) of a combination of a plurality of articles. For example, the same movable rack 311 or case 321 is selected as a storage destination of a plurality of articles to be combined.

The picking stations 5 include a movable rack station receiving movable racks 311 conveyed by the automated guided vehicle 23 and a case station receiving cases 321 conveyed by the case transfer unit 25. As another example, the picking stations 5 include a mix station receiving the movable racks 311 and the cases 321 in a mixed manner.

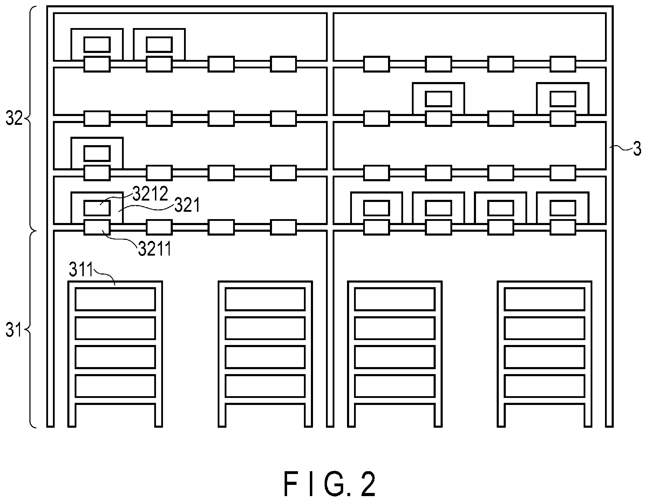

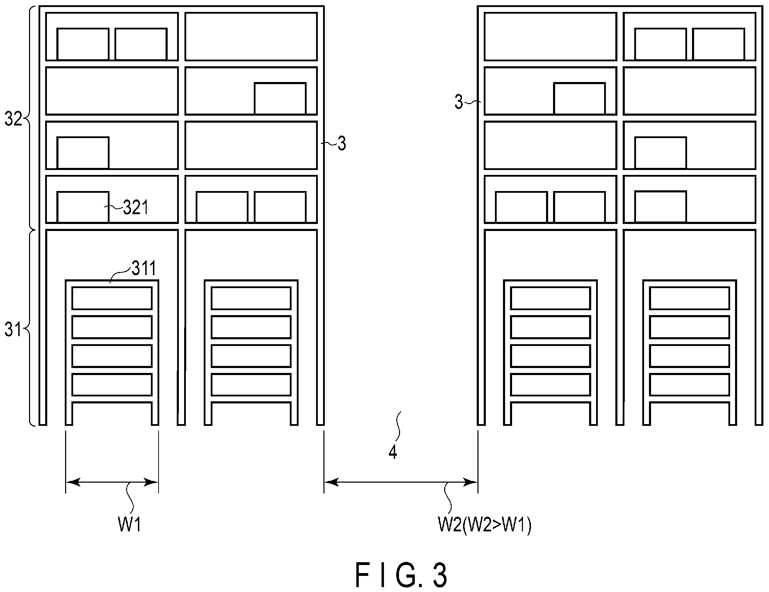

FIG. 2 is a front view illustrating an example of arrangement of the storage rack, the movable racks, and the cases according to an embodiment. FIG. 3 is a side view illustrating an example of arrangement of the storage racks, the movable racks, and the cases according to an embodiment.

As illustrated in FIG. 2 and FIG. 3, each of the storage racks 3 includes a storage region 31 (first storage region) and a storage region 32 (second storage region) in the vertical direction (perpendicular direction). The storage region 31 is a region positioned in a layer lower than (under) the storage region 32 and storing the movable racks 311. The storage region 32 is a region positioned in a layer upper than (above) the storage region 31 and partitioned into a plurality of layers with rack members, and each of the layers thereof stores a plurality of cases 321.

In addition, a rack label 3211 recording rack position identification information is attached to each of areas of each of the layers of the storage region 32. For example, rack labels 3211 are attacked to each of the rack members partitioning the storage region 32 into the layers. Each of the rack labels 3211 is a sheet-like label with a printed bar code or two-dimensional code reflecting the rack position identification information, or a wireless storage medium storing the rack position identification information. The wireless storage medium communicates with a wireless reader and transmits the rack position identification information to the wireless reader. In addition, a case label 3212 recording case identification information is attached to each of the cases 321. Each of the case labels 3212 is a label with a printed bar code or two-dimensional code reflecting the case identification information, or a wireless storage medium storing the case identification information. The wireless storage medium communicates with a wireless reader and transmits the case identification information to the wireless reader.

In addition to the storage racks 3 having the structure described above, it is possible to use case storage racks each formed of the storage region 32 extending from the floor surface to the top.

As illustrated in FIG. 3, a conveyance path 4 for the automated guided vehicle 23 and the case transfer unit 25 is provided between the two storage racks 3. A width W2 of the conveyance path 4 is larger than a width W1 of the movable rack 311 (W2<W1), and the automated guided vehicle 23 travels through the conveyance path 4 together with the movable rack 311 and conveys the movable rack 311 between the storage rack 3 and the picking station 5 to carry in or carry out the articles stored in the movable rack 311. In addition, the case transfer unit 25 travels through the conveyance path 4 and conveys the cases 321 between the storage rack 3 and the picking station 5 to carry out or carry in the article stored in the case 321.

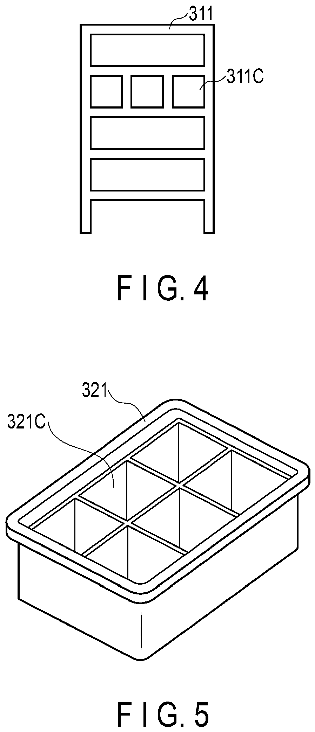

FIG. 4 is a front view illustrating an example of the movable rack according to an embodiment.

As illustrated in FIG. 4, the movable rack 311 includes a plurality of cells 311C. Movable rack identification information is allocated to each of the movable racks 311, and movable rack cell identification information is allocated to each of the cells 311C. The movable rack 311 may be formed of a single cell with only a base.

FIG. 5 is a top view illustrating an example of the case according to an embodiment.

As illustrated in FIG. 5, each of the cases 321 includes a plurality of cells 321C. As described above, each of the cases 321 is provided with a case label 3212 recording the case identification information. In addition, case cell identification information is allocated to each of the cells 321C of the case 321. The case 321 may be formed of only a single cell without a partition board.

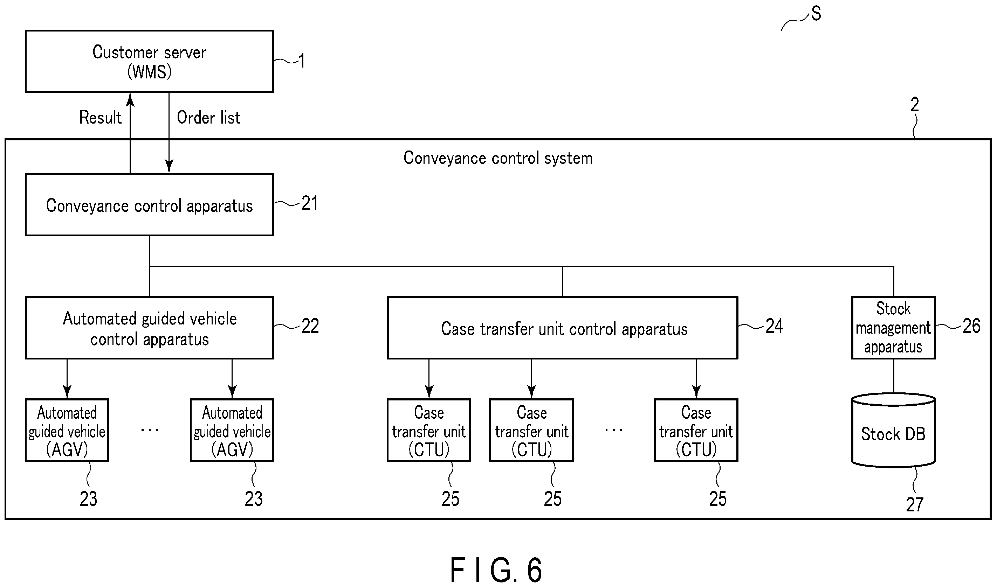

FIG. 6 is a block diagram illustrating an example of the conveyance control system according to an embodiment.

As illustrated in FIG. 6, the conveyance control system 2 communicates with a customer server 1, receives an order list, and transmits a processing result. The processing result includes a conveyance control result and a warehousing/shipping processing result. The conveyance control system 2 includes a conveyance control apparatus 21, an automated guided vehicle (AGV) control apparatus 22, automated guided vehicles 23, a case transfer unit (CTU) control apparatus 24, case transfer units 25, a stock management apparatus 26, and a stock database 27.

The conveyance control apparatus 21, the automated guided vehicle control apparatus 22, the automated guided vehicles 23, the case transfer unit control apparatus 24, and the case transfer units 25 will be described in detail later. The stock management apparatus 26 is formed of one or a plurality of computers. For example, the stock management apparatus 26 includes a processor, a main storage device, an auxiliary storage device, and a communication interface. The auxiliary storage device stores the stock database 27. The stock management apparatus 26 may be included in the conveyance control apparatus 21.

The stock database stores management information including article information relating to the article and storage destination information relating to the storage destination of the article. The management information is information associating the article information with the storage destination information, and information indicating which article is actually stored in which position or which article is to be stored in which position. Information indicating which article is actually stored in which position is used when the article is carried out. Information indicating which article is to be stored in which position is used when the article is carried in.

For example, the article information includes a SKU number code (article identification information), an article name, and attribute information. The attribute information includes the size (three-side size), weight, the frequency of appearance, the frequency of combination, a package form, an open date, and fragile article information. The storage destination information includes storage rack information relating to the storage rack 3 serving as the storage destination of the article, movable rack information relating to the movable rack 311 serving as the storage destination of the article, and case information relating the case 321 serving as the storage destination of the article. The storage rack information includes storage rack identification information being one of items of storage destination identification information and identifying the storage rack serving as the storage destination of the article, and storage rack position information (coordinates on a warehouse map) indicating the position of the storage rack serving as the storage destination of the article. The movable rack information includes movable rack identification information being one of items of the storage destination identification information and identifying the movable rack serving as the storage destination of the article, and movable rack position information (coordinates on the warehouse map) indicating the position of the movable rack serving as the storage destination of the article. The case information includes case identification information being one of items of the storage destination identification information and identifying the case serving as the storage destination of the article, and case position information (coordinates on the warehouse map) indicating the position of the case serving as the storage destination of the article.

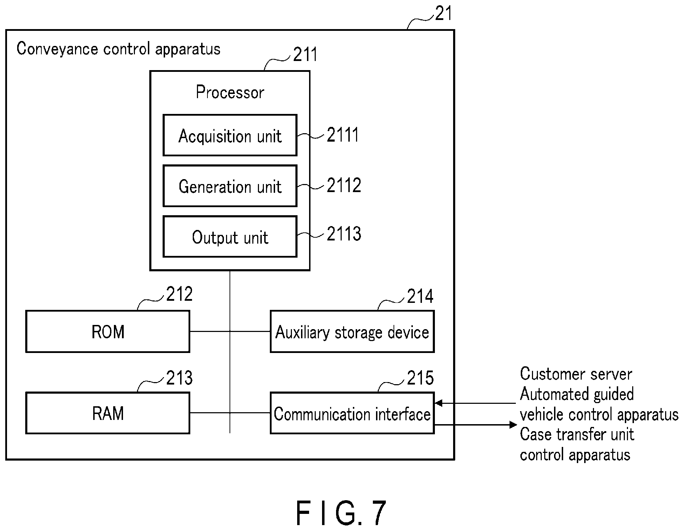

FIG. 7 is a block diagram illustrating an example of the conveyance control apparatus according to an embodiment.

The conveyance control apparatus 21 is formed of one or a plurality of computers. For example, the conveyance control apparatus 21 includes a processor 211, a ROM 212, a RAM 213, an auxiliary storage device 214, and a communication interface 215.

The processor 211 is a CPU (Central Processing Unit) or the like and corresponds to a center portion of the computer(s) executing arithmetic operations necessary for control of conveyance of the movable rack 311 and the cases 321. The processor 211 executes a program stored in the ROM 212 and the like to achieve functions of the units, such as an acquisition unit 2111, a generation unit 2112, and an output unit 2113 and the like. The acquisition unit 2111, the generation unit 2112, and the output unit 2113 and the like may be achieved with hardware, such as an LSI (Large Scale Integration), an ASIC (Application Specific Integrated Circuit), and an FPGA (Field-Programmable Gate Array) having the same functions as those achieved by execution of the program with the processor 211.

The acquisition unit 2111 acquires an order list from the customer server 1 via the communication interface 215. In addition, if the storage destination of a first article corresponding to first article identification information included in the order is a certain movable rack 311 corresponding to first storage destination identification information, the generation unit 2112 generates, on the basis of the order list and the management information, a first conveyance instruction (control signal) including the first storage destination identification information and to convey the certain movable rack 311. In addition, if the storage destination of a second article corresponding to second article identification information included in the order list is a certain case 321 corresponding to second storage destination identification information, the generation unit 2112 generates, on the basis of the order list and the management information, a second conveyance instruction (control signal) including the second storage destination identification information and to convey the certain case 321. The output unit 2113 outputs the generated first and second conveyance instructions.

The ROM 212 is a non-transitory computer-readable storage medium and stores the program described above. The ROM 212 also stores data used by the processor 211 for executing various types of processing, or various set values. The RAM 213 is a memory used for reading and writing of data. The RAM 213 is used as a work area or the like storing data temporarily used by the processor 211 for executing various types of processing.

The auxiliary storage device 214 is a non-transitory computer-readable storage medium and may store the program described above. The auxiliary storage device 214 also stores data used by the processor 211 for executing various types of processing, data generated by the processing with the processor 211, or various set values. The auxiliary storage device 214 is a memory storing management information stored in the stock database 27 and transmitted from the stock management apparatus 26.

The communication interface 215 receives an order list from the customer server 1 and transmits a control signal to the automated guided vehicle control apparatus 22 and the case transfer unit control apparatus 24.

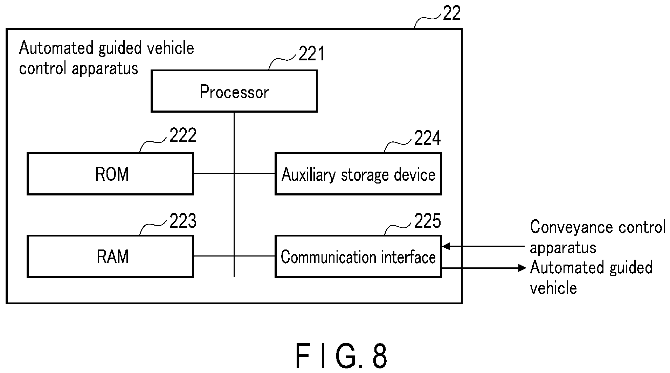

FIG. 8 is a block diagram illustrating an example of the automated guided vehicle control apparatus according to an embodiment.

The automated guided vehicle control apparatus 22 is formed of one or a plurality of computers. For example, the automated guided vehicle control apparatus 22 includes a processor 221, a ROM 222, a RAM 223, an auxiliary storage device 224, and a communication interface 225.

The processor 221 is a CPU or the like and corresponds to a center portion of the computer(s) executing arithmetic operations necessary for control of the automated guided vehicles 23. The processor 221 executes a program stored in the ROM 222 and the like to achieve control of the automated guided vehicles 23.

The ROM 222 is a non-transitory computer-readable storage medium and stores the program described above. The ROM 222 also stores data used by the processor 221 for executing various types of processing, or various set values. The RAM 223 is a memory used for reading and writing of data. The RAM 223 is used as a work area or the like storing data temporarily used by the processor 221 for executing various types of processing.

The auxiliary storage device 224 is a non-transitory computer-readable storage medium and may store the program described above. The auxiliary storage device 224 also stores data used by the processor 221 for executing various types of processing, data generated by the processing with the processor 221, or various set values.

The communication interface 225 receives a conveyance instruction from the conveyance control apparatus 21 and transmits a control signal to the automated guided vehicle 23.

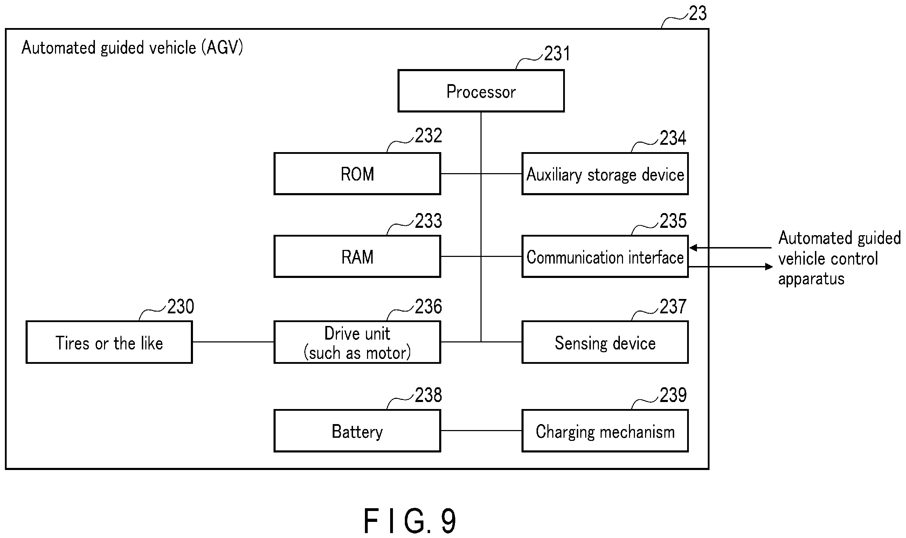

FIG. 9 is a block diagram illustrating an example of the automated guided vehicle according to an embodiment.

The automated guided vehicle 23 includes a processor 231, a ROM 232, a RAM 233, an auxiliary storage device 234, a communication interface 235, a drive unit 236, a sensing device 237, a battery 238, a charging mechanism 239, and tires 230 and the like.

The processor 231 is a CPU or the like and corresponds to a center portion of a computer executing arithmetic operations necessary for operations, such as acceleration, deceleration, stop, turn, and loading/unloading of the movable rack 311, and control. The processor 231 executes a program stored in the ROM 232 and the like to generate and output a drive signal, on the basis of a control signal from the automated guided vehicle control apparatus 22.

For example, the automated guided vehicle control apparatus 22 transmit a control signal to cause the automated guided vehicle 23 to move from the current position to a first position (target position corresponding to the movable rack 311), move the first position to a second position (target position corresponding to a predetermined area of the picking station 5), and move (return) from the second position to the first position. The processor 231 outputs a drive signal corresponding to the control signal transmitted from the automated guided vehicle control apparatus 22. In this manner, the automated guided vehicle 23 moves from the current position to the first position, moves from the first position to the second position, and moves from the second position to the first position. In addition, the processor 231 outputs a drive signal corresponding to a loading/unloading instruction for the movable rack 311 included in the control signal transmitted from the automated guided vehicle control apparatus 22. In this manner, the automated guided vehicle 23 lifts up the movable rack 311 with a pusher and/or puts down the lifted movable rack 311.

The ROM 232 is a non-transitory computer-readable storage medium and stores the program described above. The ROM 232 also stores data used by the processor 231 for executing various types of processing, or various set values. The RAM 233 is a memory used for reading and writing of data. The RAM 233 is used as a work area or the like storing data temporarily used by the processor 231 for executing various types of processing.

The auxiliary storage device 234 is a non-transitory computer-readable storage medium and may store the program described above. The auxiliary storage device 234 also stores data used by the processor 231 for executing various types of processing, data generated by the processing with the processor 231, or various set values.

The communication interface 235 receives a control signal from the automated guided vehicle control apparatus 22.

The drive unit 236 is a motor or the like and rotates or stops the motor on the basis of a drive signal output from the processor 231. The motive power of the motor is transmitted to the tires 231, and the motive power of the motor is transmitted to the steering mechanism. With such motive power from the motor, the automated guided vehicle 23 moves to the target position. In addition, in a state in which the automated guided vehicle 23 has slipped under the movable rack 311, the drive unit 236 rotates (forward rotation) the motor on the basis of the drive signal output from the processor 231. With the motive power from the motor, the pusher rises and the movable rack 311 is lifted up. In addition, after the automated guided vehicle 23 arrives at the target position, the drive unit 236 rotates (reverse rotation) the motor on the basis of the drive signal output from the processor 231. With the motive power from the motor, the pusher lowers and the movable rack 311 is put down to the floor surface.

The sensing device 237 includes a plurality of reflection sensors and a photographing camera. Each of the reflection sensors is attached to the periphery of the automated guided vehicle 23. Each of the reflection sensors emits laser light, detects time from emission of the laser light to return of the laser light reflected by the object, detects a distance to the object on the basis of the detected time, and notifies the processor 231 of a sensing signal. On the basis of the sensing signal from the sensing device 237, the processor 231 outputs a control signal to control traveling of the automated guided vehicle 23. For example, the processor 231 outputs a control signal, such as deceleration or stop, to avoid collision with the object, on the basis of the sensing signal from the sensing device 237. The photographing camera photographs the surroundings and outputs the photographed image to the processor 231. The processor 231 analyzes the photographed image and outputs a control signal, such as deceleration or stop, to avoid collision with the object. The processor 231 also decodes a two-dimensional code attached to the floor surface detected with the photographing camera and acquires position information.

The battery 238 supplies power necessary for the drive unit 236 and the like. The charging mechanism 239 is a mechanism connecting the charging station with the battery 238. The battery 238 is charged with power supplied from the charging station via the charging mechanism 239.

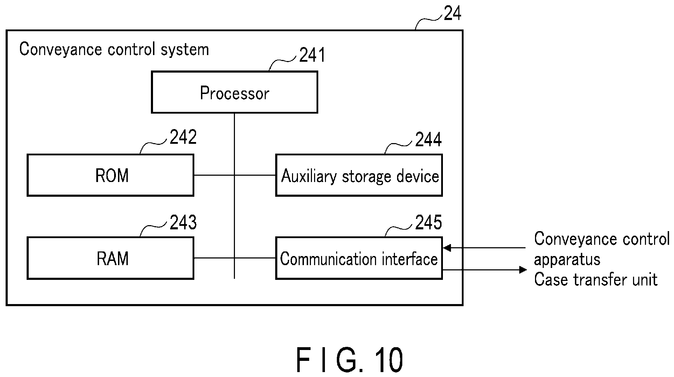

FIG. 10 is a block diagram illustrating an example of the case transfer unit control apparatus according to an embodiment.

The case transfer unit control apparatus 24 is formed of one or a plurality of computers. For example, the case transfer unit control apparatus 24 includes a processor 241, a ROM 242, a RAM 243, an auxiliary storage device 244, and a communication interface 245.

The processor 241 is a CPU or the like and corresponds to a center portion of the computer(s) executing arithmetic operations necessary for control of the case transfer units 25. The processor 241 executes a program stored in the ROM 242 and the like to achieve control of the case transfer units 25.

The ROM 242 is a non-transitory computer-readable storage medium and stores the program described above. The ROM 242 also stores data used by the processor 241 for executing various types of processing, or various set values. The RAM 243 is a memory used for reading and writing of data. The RAM 243 is used as a work area or the like storing data temporarily used by the processor 241 for executing various types of processing.

The auxiliary storage device 244 is a non-transitory computer-readable storage medium and may store the program described above. The auxiliary storage device 244 also stores data used by the processor 241 for executing various types of processing, data generated by the processing with the processor 241, or various set values.

The communication interface 245 receives a conveyance instruction from the conveyance control apparatus 21 and transmits a control signal to the case transfer unit 25.

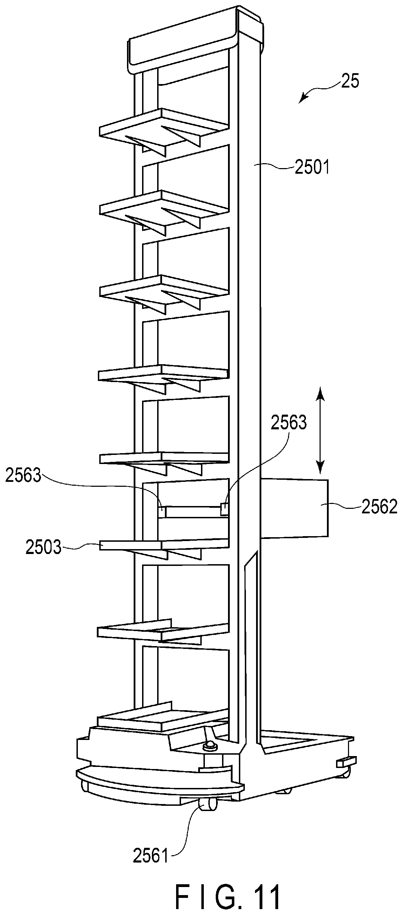

FIG. 11 is a perspective view illustrating an example of the case transfer unit according to an embodiment.

As illustrated in FIG. 11, the case transfer unit 25 includes a ladder 2501 and a plurality of trays 2503. The trays 2503 are attached to the ladder 2501 and hold the cases 321 taken in. In addition, the case transfer unit 25 includes self-propellent tires 2561 and an extraction mechanism 2562. The extraction mechanism 2562 moves vertically (that is, moves in the perpendicular direction) along the ladder 2501. The extraction mechanism 2562 includes a pair of arms 2563 moving back and forth (that is, moving in the horizontal direction). The arms 2563 hold and take in, or grip and take in, the case 321 in the target position, and dispose the taken case 321 onto the tray 2503. As another operation, the arms 2563 hold and discharge, or grip and discharge, the case 321 on the tray 2503, and dispose the discharged case 321 in the target position.

On the basis of the control signal from the case transfer unit control apparatus 24, the case transfer unit 25 travels to the target position of the target storage rack 3, vertically moves the extraction mechanism 2562 toward the target position of the target storage rack 3, holds and takes in, or grips and takes in, the case 321 in the target position with the arms 2563, and loads the taken case 321 on the tray 2503. As another operation, the case transfer unit 25 holds and discharges, or grips and discharges, the case 321 loaded on the tray 2503 with the arms 2563, and loads the discharged case 321 in the target position.

In addition, on the basis of the control signal from the case transfer unit control apparatus 24, the case transfer unit 25 travels to the target position of the target picking station 5, vertically moves the extraction mechanism 2562 toward the target position of the picking station 5, holds and discharges, or grips and discharges, the case 321 loaded on the tray 2503 with the arms 2563, and loads the discharged case 321 in the target position. As another operation, the case transfer unit 25 holds and takes in, or grips and takes in, the case 321 in the target position of the picking station 5 with the arms 2563, and loads the taken case 321 on the tray 2503.

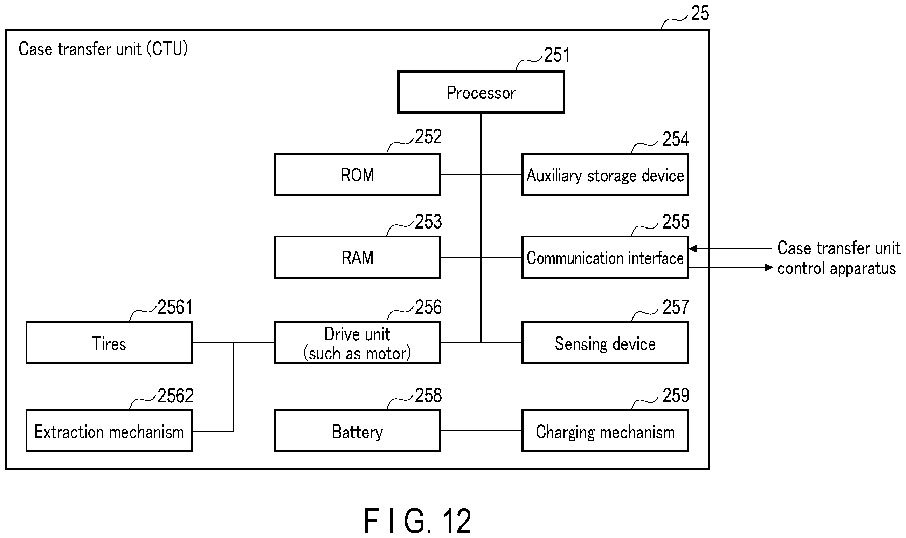

FIG. 12 is a block diagram illustrating an example of the case transfer unit according to an embodiment.

The case transfer unit 25 includes a processor 251, a ROM 252, a RAM 253, an auxiliary storage device 254, a communication interface 255, a drive unit 256, a sensing device 257, a battery 258, a charging mechanism 259, tires 2561, and the extraction mechanism 2562 and the like.

The processor 251 is a CPU or the like and corresponds to a center portion of a computer executing arithmetic operations necessary for operations, such as acceleration, deceleration, stop, turn, and loading/unloading of the case 321, and control. The processor 251 executes a program stored in the ROM 252 and the like to generate and output a drive signal, on the basis of a control signal from the case transfer unit control apparatus 24.

For example, the case transfer unit control apparatus 24 transmit a control signal to cause the case transfer unit 25 to move from the current position to a first position (target position corresponding to the case 321), move the first position to a second position (target position corresponding to a predetermined area of the picking station 5), and move (return) from the second position to the first position. As another example, the case transfer unit control apparatus 24 may output a control signal to cause the case transfer unit 25 to move from the current position to a plurality of first positions (target positions corresponding to the cases 321), move from the first positions to a plurality of second positions (target positions corresponding to predetermined positions of the picking station 5), and move (return) from the second position to the first position. The processor 251 outputs a drive signal corresponding to the control signal transmitted from the case transfer unit control apparatus 24. In this manner, the case transfer unit 25 moves from the current position to the first position, moves from the first position to the second position, and moves from the second position to the first position. In addition, the processor 251 outputs a drive signal corresponding to a take-in/out instruction for the case 321 included in the control signal transmitted from the case transfer unit control apparatus 24. In this manner, the case transfer unit 25 collects the case 321 positioned at a predetermined height of the storage region 32 of the storage rack 3 and/or return the case 321 to a predetermined height of the storage region 32 of the storage rack 3, with the arms of the extraction mechanism 2562.

The ROM 252 is a non-transitory computer-readable storage medium and stores the program described above. The ROM 252 also stores data used by the processor 251 for executing various types of processing, or various set values. The RAM 253 is a memory used for reading and writing of data. The RAM 253 is used as a work area or the like storing data temporarily used by the processor 251 for executing various types of processing.

The auxiliary storage device 254 is a non-transitory computer-readable storage medium and may store the program described above. The auxiliary storage device 254 also stores data used by the processor 251 for executing various types of processing, data generated by the processing with the processor 251, or various set values.

The communication interface 255 receives a control signal from the case transfer unit control apparatus 24.

The drive unit 256 is a motor or the like and rotates or stops the motor on the basis of a drive signal output from the processor 251. The motive power of the motor is transmitted to the tires 2561, and the motive power of the motor is transmitted to the steering mechanism. With such motive power from the motor, the case transfer unit 25 moves to the target position. In addition, in a state in which the case transfer unit 25 has arrived at the target position, the drive unit 256 rotates the motor on the basis of the drive signal output from the processor 251. With the motive power from the motor, the extraction mechanism 2562 rises or lowers to the target height, and the case 321 at the target height is collected by a case collecting operation of the arms of the extraction mechanism 2562. In addition, in a state in which the case transfer unit 25 has arrived the target position, the drive unit 256 rotates the motor on the basis of the drive signal output from the processor 251. With the motive power from the motor, the extraction mechanism 2562 rises or lowers to the target height, and the case 321 is returned to a position at the target height by a case return operation of the arms of the extraction mechanism 2562.

The sensing device 257 includes a plurality of reflection sensors and a photographing camera. Each of the reflection sensors is attached to the periphery of the case transfer unit 25. Each of the reflection sensors emits laser light, detects time from emission of the laser light to return of the laser light reflected by the object, detects a distance to the object on the basis of the detected time, and notifies the processor 251 of a sensing signal. On the basis of the sensing signal from the sensing device 257, the processor 251 outputs a control signal to control traveling of the case transfer unit 25. For example, the processor 251 outputs a control signal, such as deceleration or stop, to avoid collision with the object, on the basis of the sensing signal from the sensing device 257. The photographing camera photographs the surroundings and outputs the photographed image to the processor 251.

The processor 251 analyzes the photographed image and outputs a control signal, such as deceleration or stop, to avoid collision with the object. The processor 251 also analyzes the photographed image and detects the storage racks 3, the movable racks 311, and the cases 321. The processor 251 also analyzes the photographed image, detects a bar code or a two-dimensional code from the rack label 3211, and detects the rack position identification information reflected on the bar code or the two-dimensional code. The processor 251 also analyzes the photographed image, detects a bar code or a two-dimensional code from the case label 3212, and detects the case identification information reflected on the bar code or the two-dimensional code. The bar code or the two-dimensional code may indicate position information attached to the floor surface.

The battery 258 supplies power necessary for the drive unit 256 and the like. The charging mechanism 259 is a mechanism connecting the charging station with the battery 258. The battery 258 is charged with power supplied from the charging station via the charging mechanism 259.

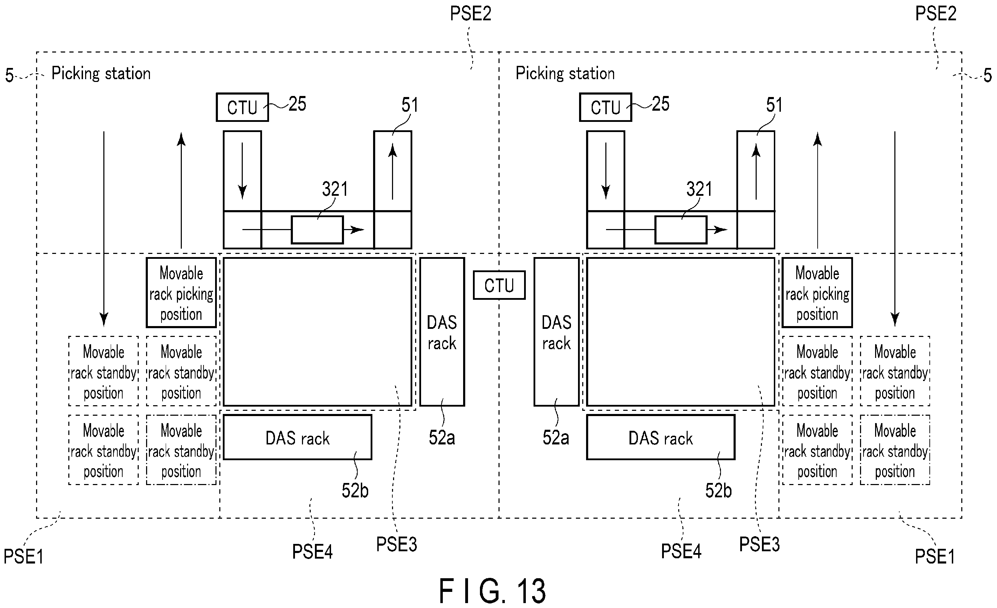

FIG. 13 is a diagram illustrating an example of a layout of picking stations handling both the movable racks and the cases according to an embodiment.

As illustrated in FIG. 13, the warehouse management system S includes a plurality of picking stations 5. Each of the picking stations 5 includes areas PSE1 (first area), PSE2 (second area), PSE3 (third area), and PSE4 (fourth area). The area PSE1 is an area accepting the movable racks 311 conveyed by the automated guided vehicles 23. The area PSE2 is an area accepting the cases 321 conveyed by the case transfer units 25. The area PSE3 is an area for work of extracting the articles from the movable racks 311 conveyed to the area PSE1 and work of extracting the articles from the cases 321 conveyed to the area PSE2. The area PSE4 is an area in which assortment racks 52a and 52b are arranged. The assortment racks 52a and 52b store assortments of the articles extracted from the movable racks 311 and the articles extracted from the cases 321. The assortment racks 52a and 52b are racks used in a DAS (Digital Assort System) and also referred to as "DAS racks".

The area PSE1 includes a movable rack picking position and a plurality of movable rack standby positions. The automated guided vehicle control apparatus 22 controls each of automated guided vehicles 23 to convey the predetermined movable rack 311 from the predetermined storage rack 3 to the area PSE1 of the predetermined picking station 5, on the basis of a conveyance instruction. Each of the automated guided vehicles 23 conveys the predetermined movable rack 311 to the movable rack standby position and, when the movable rack picking position becomes vacant, moves the predetermined movable rack 311 from the movable rack standby position to the movable rack picking position.

A conveyor 51 is disposed in the area PSE2, and the conveyor 51 conveys the cases 321. The case transfer unit control apparatus 24 controls each of the case transfer units 25 to convey the predetermined case 321 from the predetermined storage rack 3 to the conveyor 51 of the area PSE2 of the predetermined picking station 5, on the basis of a conveyance instruction. Each of the case transfer units 25 discharges the case 321 onto the conveyor 51. The conveyor 51 conveys the case 321. As another example, the case 321 may be directly picked from the case transfer unit 25, without using the conveyor 51.

In the area PSE3, for example, a person in charge of the assortment work is disposed, and the person picks the target article from the conveyed movable rack 311, and puts the target article picked from the movable rack 311 into an assortment tray of the assortment rack 52a or 52b in the area PSE4. In addition, the person in charge picks the target article from the conveyed case 321, and puts the target article picked from the case 321 into an assortment tray of the assortment rack 52a or 52b in the area PSE4. As another example, a picking robot may be disposed in the area PSE3, and the picking robot may pick the target article and put the target article into the tray.

For example, the picking stations 5 includes the area PSE3 arranged in the center thereof, and includes the areas PSE1, PSE2, and PSE4 arranged around the area PSE3. For example, the areas of the successive first and the second picking stations 5 may be arranged symmetrically. The area PSE2 is arranged in front of the area PSE3 arranged in the center of the first picking station 5, the area PSE1 is arranged on the left side thereof, and the area PSE4 is arranged to range from the right side to the back side thereof. In addition, the area PSE2 is arranged in front of the area PSE3 arranged in the center of the second picking station 5, the area PSE1 is arranged on the right side thereof, and the area PSE4 is arranged to range from the left side to the back side thereof. Specifically, the areas PSE4 of the successive first and the second picking stations 5 are arranged in opposed positions.

For example, the processor 211 transmits, to the case transfer unit control apparatus 24, an inter-rack conveyance instruction to convey the predetermined case 321 of the assortment rack 52a in the area PSE4 of the first picking station 5 to the assortment rack 52a in the area PSE4 of the second picking station 5. On the basis of the inter-rack conveyance instruction, the case transfer unit control apparatus 24 controls the case transfer unit 25 to convey the predetermined case 321 of the assortment rack 52a in the area PSE4 of the first picking station 5 to the assortment rack 52a in the area PSE4 of the second picking station 5. On the basis of the control signal from the case transfer unit control apparatus 24, the case transfer unit 25 conveys the predetermined case 321 of the assortment rack 52a in the area PSE4 of the first picking station 5 to the assortment rack 52a in the area PSE4 of the second picking station 5.

According to the present embodiment, the automated guided vehicles 23 and the case transfer units 25 convey the movable racks 311 and the cases 321, respectively, to one picking station 5, in a mixed manner. In other words, the automated guided vehicles 23 and the case transfer units 23 conveys the articles stored in different storage members to one picking station 5 in cooperation. In one picking station 5, the articles can be picked from each of the movable racks 311 and the cases 321.

In addition, according to the present embodiment, the case transfer unit 25 conveys the case 321 between the first and the second picking stations 5. In a case of assorting the article conveyed with the movable rack 311 and the article conveyed with the case 321 into the tray of the assortment rack 52a in the first picking station 5, there are cases where it is more efficient to, for example, transfer the case 321 having been conveyed to the adjacent second picking station 5 to the first picking station 5 than conveying the movable rack 311 and the case 321 to the first picking station 5. The present embodiment enables transfer to improve efficiency and minimizes the moving distance of the case 321.

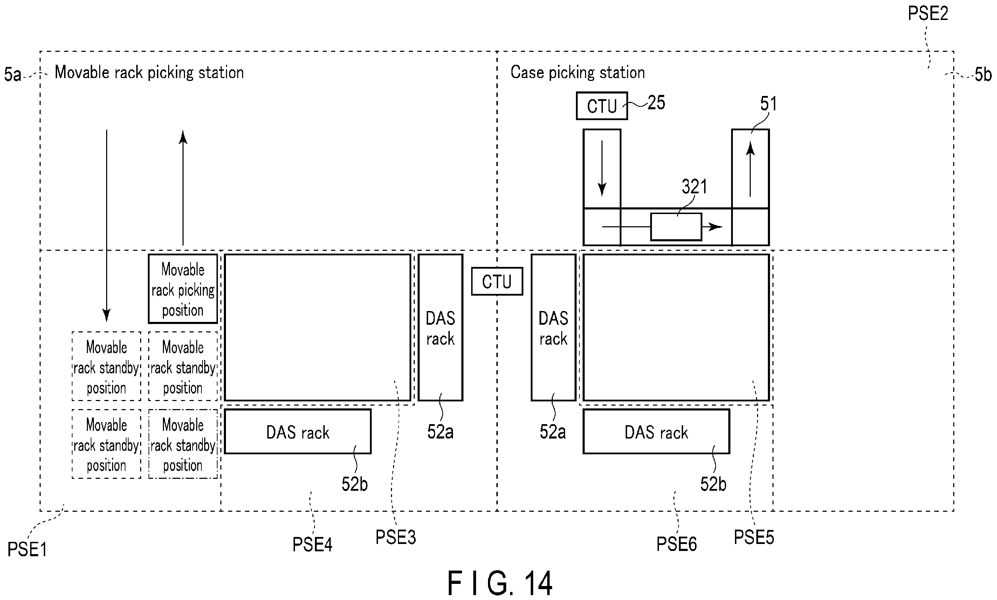

FIG. 14 is a diagram illustrating an example of layout of picking stations handling both the movable racks and the cases according to an embodiment. The layout illustrated in FIG. 14 may be used instead of the layout illustrated in FIG. 13, or the layout illustrated in FIG. 13 and the layout illustrated in FIG. 14 may be used in a mixed manner.

As illustrated in FIG. 14, the warehouse management system S includes a plurality of picking stations including a movable rack picking station 5a and a case picking station 5b. The picking station 5a includes areas PSE1 (first area), PSE3 (third area), and PSE4 (fourth area). The picking station 5b includes areas PSE2 (second area), PSE5 (fifth area), and PSE6 (sixth area).

The area PSE1 is an area accepting the movable racks 311 conveyed by the automated guided vehicles 23. The area PSE2 is an area accepting the cases 321 conveyed by the case transfer units 25. The area PSE3 is an area for work of extracting the articles from the movable racks 311 conveyed to the area PSE1. The area PSE4 is an area in which assortment racks 52a and 52b are arranged. The assortment racks 52a and 52b store assortments of the articles extracted from the movable racks 311 and the articles extracted from the cases 321. The area PSE5 is an area for work of extracting the articles from the cases 321 conveyed to the area PSE2. The area PSE6 is an area in which assortment racks 52a and 52b storing assortments of the articles extracted from the cases 321 are arranged.

The area PSE1 includes a movable rack picking position and a plurality of movable rack standby positions. The automated guided vehicle control apparatus 22 controls each of the automated guided vehicles 23 to convey the predetermined movable rack 311 from the predetermined storage rack 3 to the area PSE1 of the movable rack picking station 5a, on the basis of a conveyance instruction. Each of the automated guided vehicles 23 conveys the predetermined movable rack 311 to the movable rack standby position and, when the movable rack picking position becomes vacant, moves the predetermined movable rack 311 from the movable rack standby position to the movable rack picking position.

A conveyor 51 is disposed in the area PSE2, and the conveyor 51 conveys the cases 321. The case transfer unit control apparatus 24 controls each of the case transfer units 25 to convey the predetermined case 321 from the predetermined storage rack 3 to the conveyor 51 of the area PSE2 of the case picking station 5b, on the basis of a conveyance instruction. Each of the case transfer units 25 discharges the case 321 onto the conveyor 51. The conveyor 51 conveys the case 321. As another example, the case 321 may be directly picked from the case transfer unit 25, without using the conveyor 51.

In the area PSE3, for example, a person in charge of the assortment work is disposed, and the person picks the target article from the conveyed movable rack 311, and puts the target article picked from the movable rack 311 into an assortment tray of the assortment rack 52a or 52b in the area PSE4. In addition, the person in charge picks the target article from the case 321 conveyed by the case transfer unit 25 from the case picking station 5b, and puts the target article picked from the case 321 into the assortment tray of the assortment rack 52a or 52b in the area PSE4. As another example, a picking robot may be disposed in the area PSE3, and the picking robot may pick the target article and put the target article into the tray.

In the area PSE5, for example, a person in charge of the assortment work is disposed, and the person picks the target article from the conveyed case 321, and puts the target article picked from the case 321 into an assortment tray of the assortment rack 52a or 52b in the area PSE6. As another example, a picking robot may be disposed in the area PSE5, and the picking robot may pick the target article and put the target article into the tray.

For example, the movable rack picking stations 5a includes the area PSE3 arranged in the center thereof, and includes the areas PSE1 and PSE4 arranged around the area PSE3. The case picking stations 5b includes the area PSE5 arranged in the center thereof, and includes the areas PSE2 and PSE6 arranged around the area PSE5. For example, the areas of the successive movable rack picking station 5a and the case picking station 5b may be arranged symmetrically. The area PSE1 is arranged on the left side of the area PSE3 arranged in the center of the movable rack picking station 5a, and the area PSE4 is arranged to range from the right side to the back side thereof. In addition, the area PSE2 is arranged in front of the area PSE5 arranged in the center of the case picking station 5b, and the area PSE6 is arranged to range from the left side to the back side thereof. Specifically, the area PSE4 and the area PSE6 are arranged in opposed positions.

For example, the processor 211 transmits, to the case transfer unit control apparatus 24, an inter-rack conveyance instruction to convey the predetermined case 321 of the assortment rack 52a in the area PSE6 of the case picking station 5b to the assortment rack 52a in the area PSE4 of the movable rack picking station 5a. On the basis of the inter-rack conveyance instruction, the case transfer unit control apparatus 24 controls the case transfer unit 25 to convey the predetermined case 321 of the assortment rack 52a in the area PSE6 of the case picking station 5b to the assortment rack 52a in the area PSE4 of the movable rack picking station 5a. On the basis of the control signal from the case transfer unit control apparatus 24, the case transfer unit 25 conveys the predetermined case 321 of the assortment rack 52a in the area PSE6 of the case picking station 5b to the assortment rack 52a in the area PSE4 of the movable rack picking station 5a.

According to the present embodiment, the automated guided vehicles 23 convey the movable racks 311 to the movable rack picking station 5a, and the case transfer units 25 convey the cases 321 to the case picking station 5b. In other words, the automated guided vehicles 23 and the case transfer units 25 convey the articles stored in different storage members to different picking stations in cooperation. The article can be picked from each of the movable racks 311 in the movable rack picking station 5a, and the article can be picked from each of the cases 321 in the case picking station 5b.

In addition, according to the present embodiment, the case transfer unit 25 conveys the case 321 between the movable rack picking station 5a and the case picking station 5b. For example, the movable rack 311 is conveyed to the movable rack picking station 5a, the case is conveyed to the case picking station 5b, and the case is conveyed from the case picking station 5b to the movable rack picking station 5a. The present embodiment enables transfer to improve efficiency and enables assortment of the article conveyed with the movable rack 311 and the article conveyed with the case 321 in the movable rack picking station 5a.

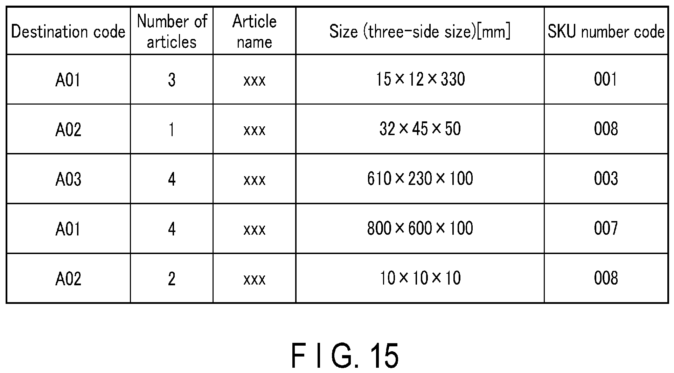

FIG. 15 is a diagram illustrating an example of an order list (carry-out order list or carry-in order list) according to an embodiment.

The order list includes a plurality of rows. One row of the order list includes information relating to one article type (SKU: Stock Keeping Unit), and includes, for example, a SKU number code (article identification information), an article name, a destination code (destination name), the number of articles, and attribute information. The attribute information includes the size (three-size size), weight, form of package, open date, and fragile article information.

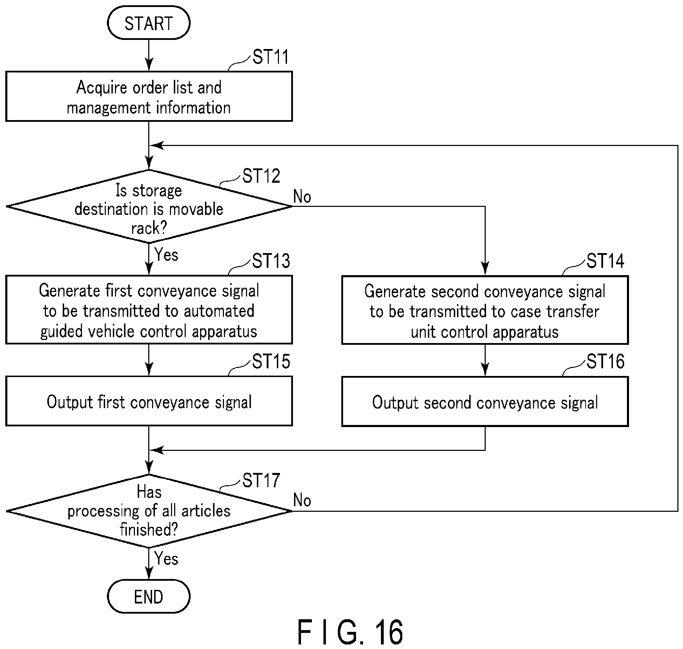

FIG. 16 is a flowchart illustrating an example of conveyance control executed by the conveyance control apparatus according to an embodiment. The conveyance control explained herein is also applicable to either of carry-out and carry-in of the articles.

The communication interface 215 of the conveyance control apparatus 21 communicates with the customer server 1 and receives an order list (carry-out order list or carry-in order list). The order list includes carry-out or carry-in article information. Specifically, the order list includes article information of the picking target. An example of the article information is illustrated in FIG. 7.

The acquisition unit 2111 of the processor 211 acquires an order list from the customer server 1 via the communication interface 215 and acquires management information from the stock database 27 of the stock management apparatus 26 (ST11).

The generation unit 2112 of the processor 211 generates a control signal to control conveyance of the conveyance vehicle conveying the storage member of the target article according to the storage destination of the target article, on the basis of the order list and the management information.

For example, on the basis of the order list and the management information, if the storage destination of the first article corresponding to the first article identification information included in the order list is the predetermined movable rack 311 corresponding to the first storage destination identification information (ST12, YES), the generation unit 2112 generates a first conveyance instruction (control signal) including the first storage destination identification information and to convey the predetermined movable rack 311 (ST13).

In addition, on the basis of the order list and the management information, if the storage destination of the second article corresponding to the second article identification information included in the order list is the predetermined case 321 corresponding to the second storage destination identification information (ST12, NO), the generation unit 2112 generates a second conveyance instruction (control signal) including the second storage destination identification information and to convey the predetermined case 321 (ST14).

The output unit 2113 of the processor 211 outputs the generated first conveyance instruction (ST15). The output unit 2113 also outputs the generated second conveyance instruction (ST16). The processing from ST12 to ST16 is repeated until the end of generation and output of conveyance instructions to convey all the articles indicated by the article information of the order list (ST17, NO).

For example, the acquisition unit 2111 acquires a first carry-out order requesting carrying out of the first article corresponding to the first article identification information and a second carry-out order requesting carrying out of the second article corresponding to the second article identification information, via the communication interface 215.

The generation unit 2112 generates a first carry-out instruction to carry out the predetermined movable rack 311 from a predetermined position toward the picking station 5, on the basis of the first carry-out order and the management information, and the output unit 2113 outputs the first carry-out instruction to the automated guided vehicle control apparatus 22.

In addition, the generation unit 2112 generates a second carry-out instruction to extract the predetermined case 321 from a predetermined position and carry out the case 321 toward the picking station 5, on the basis of the second carry-out order and the management information, and the output unit 2113 outputs the second carry-out instruction to the case transfer unit control apparatus 24.

The communication interface 215 transmits the first carry-out instruction to the automated guided vehicle control apparatus 22, and transmits the second carry-out instruction to the case transfer unit control apparatus 24. The automated guided vehicle control apparatus 22 controls the automated guided vehicle 23 on the basis of the first carry-out instruction. The automated guided vehicle 23 carries out the predetermined movable rack 311 from the predetermined position toward the picking station 5, on the basis of the first carry-out instruction. The case transfer unit control apparatus 24 controls the case transfer unit 25 on the basis of the second carry-out instruction. The case transfer unit 25 extracts the predetermined case 321 from the predetermined position and carries out the case 321 toward the picking station 5, on the basis of the second carry-out instruction.

As another example, the acquisition unit 2111 acquires a first carry-in order requesting carrying in of the first article corresponding to the first article identification information and a second carry-in order requesting carrying out of the second article corresponding to the second article identification information, via the communication interface 215.

On the basis of the first carry-in order and the management information, the generation unit 2112 selects the predetermined movable rack 311 as the carry-in destination and generates a first carry-in instruction to carry in the predetermined movable rack 311 in which the first article is stored at the picking station 5 from the picking station 5 toward the predetermined storage rack 3, and the output unit 2113 outputs the first carry-in instruction to the automated guided vehicle control apparatus 22. In addition, on the basis of the second carry-in order and the management information, the generation unit 2112 selects the predetermined case 321 as the carry-in destination and generates a second carry-in instruction to carry in the predetermined case 321 in which the second article is stored at the picking station 5 from the picking station 5 toward the predetermined storage rack 3, and the output unit 2113 outputs the second carry-in instruction to the case transfer unit control apparatus 24.

The communication interface 215 transmits the first carry-in instruction to the automated guided vehicle control apparatus 22, and transmits the second carry-in instruction to the case transfer unit control apparatus 24. The automated guided vehicle control apparatus 22 controls the automated guided vehicle 23 on the basis of the first carry-in instruction. The automated guided vehicle 23 carries out the predetermined movable rack 311 in which the first article is stored at the picking station 5 from the picking station 5 toward the predetermined storage rack 3, on the basis of the first carry-in instruction. The case transfer unit control apparatus 24 controls the case transfer unit 25 on the basis of the second carry-in instruction. The case transfer unit 25 carries in the predetermined case 321 in which the second article is stored at the picking station 5 from the picking station 5 toward the predetermined storage rack 3, on the basis of the second carry-in instruction.

The management information includes article information, and the article information includes article attribute information indicating the size or weight of the article. For example, each of the movable racks 311 stores one or a plurality of articles having a size less than the first size. Each of the cases 321 stores one or a plurality of articles having a size less than the second size. The first size is larger than the second size. The processor 211 selects the carry-in destinations of the first and the second articles on the basis of the article attribute information. For example, the processor 211 selects the movable rack 311 as the carry-in destination for the first article having a size equal to or larger than the second size and less than the first size. In addition, the processor 211 selects the case 321 as the carry-in destination for the second article having a size less than the second size. As another example, the processor 211 may select either the movable rack 311 or the case 321 for the second article being a small article.

Each of the movable racks 311 stores one or a plurality of articles having a weight less than the first total weight. Each of the cases 321 stores one or a plurality of articles having a weight less than the second total weight. The first total weight is heavier than the second total weight. For example, the first total weight is set to 300 kg, and the second total weight is set to 30 kg. The processor 211 selects the carry-in destinations of the first and the second articles on the basis of the article attribute information. For example, the processor 211 selects the movable rack 311 as the carry-in destination for the first article having weight less than 300 kg and greater than 30 kg. In addition, the processor 211 selects the case 321 as the carry-in destination for the article equal to or less than 30 kg. As another example, the processor 211 may select either the movable rack 311 or the case 321 for the second article being a small article.

In addition, the generation unit 2112 may generate the first or second carry-in instruction on the basis of a result of optimization of article storage explained below, in addition to the first carry-in order and the management information. Specifically, the generation unit 2112 may generate the first or second carry-in instruction on the basis of a combination of article arrangement X minimizing a cluster C2 explained below. This minimizes the storage efficiency of the articles in the warehouse.

The following is an explanation of an example of optimization of article storage.

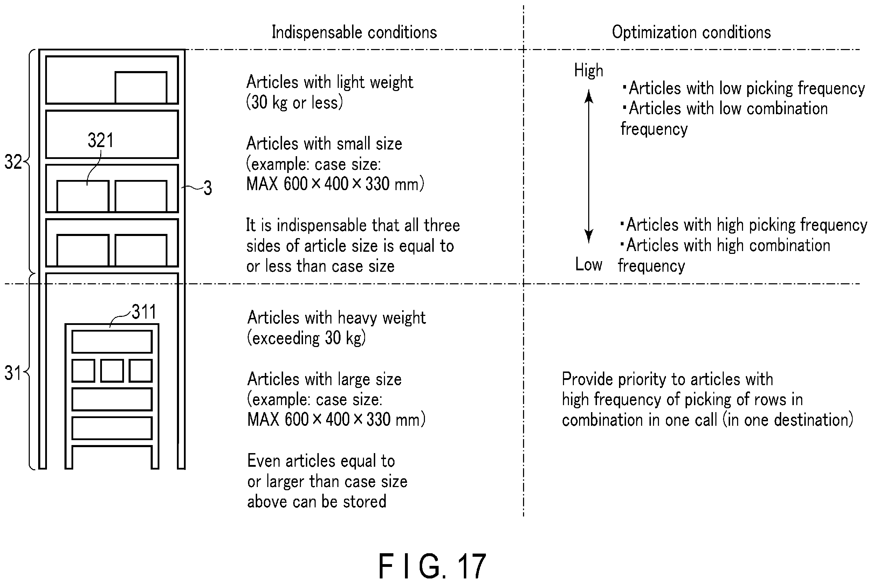

FIG. 17 is a diagram illustrating an example of optimization of article storage according to an embodiment.

The processor 211 attempts optimization of article storage on the basis of the management information, indispensable conditions and optimization information stored in the auxiliary storage device 214. The processor 211 plans arrangement of the articles to satisfy optimization conditions while satisfying the indispensable conditions.

The indispensable conditions are conditions with priority over the optimization conditions. For example, the indispensable conditions include a condition of setting the storage destination of an article having heavy weight (for example, article exceeding 30 kg) or an article having a large size (for example, article having a size exceeding 600×400×330 mm) to the movable rack 311.

The optimization conditions are conditions achieving stock arrangement improving the picking processing capacity. The optimization conditions include a condition of arranging an article having high frequency of appearance and included in the article attribute information in a lower position in the storage region 32 and arranging an article having low frequency of appearance in a higher position in the storage region 32. In addition, the optimization conditions include a condition of arranging an article having high frequency of appearance in a position close to the picking station 5 and arranging an article having low frequency of appearance in a position distant from the picking station 5. The frequency of appearance means a picking frequency or a combination frequency. The optimization conditions also include article arrangement maximizing the number of processes of the picking list (number of picking rows) in one carriage processing with the automated guided vehicle 23 and the case transfer unit 25.

Each of the case transfer units 25 acquires (Pick) the case 321 from the target position and arranges (STOW) the case 321 by vertical movement of the extraction mechanism 2562. For this reason, the processor 211 statistically analyzes the frequency of appearance of each of the articles from the order list, and makes a plan to arrange the article with high frequency of appearance in a lower position of the storage region 32 and arrange the article with low frequency of appearance in a higher position of the storage region 32. As another example, the processor 211 makes a plan to arrange the article having high frequency of appearance in a position close to the picking station 5 and arranging the article having low frequency of appearance in a position distant from the picking station 5. In addition, the processor 211 plans arrangement of articles to minimize the number of times of carriage from the storage racks 3 to the picking stations 5 with the automated guided vehicles 23 and the case transfer units 25. Minimizing the number of times of carriage is to minimize the traveling distances of the automated guided vehicles 23 and the case transfer units 25.

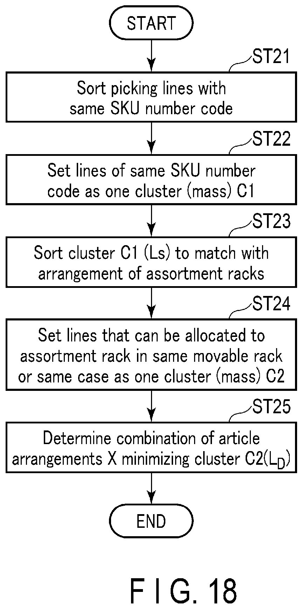

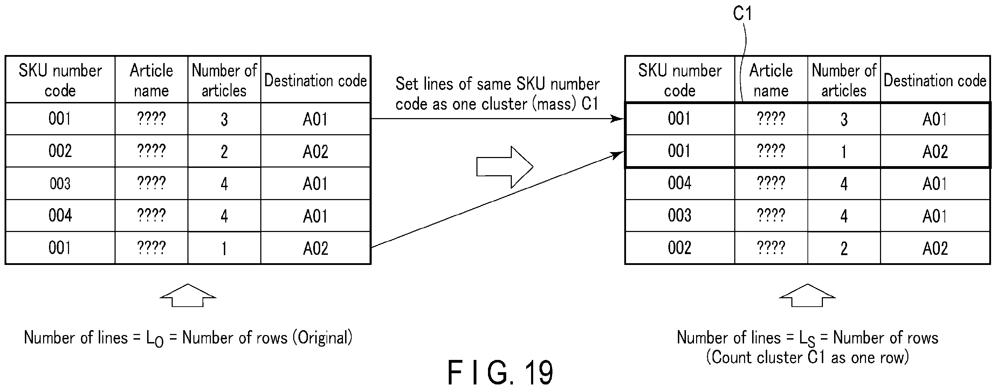

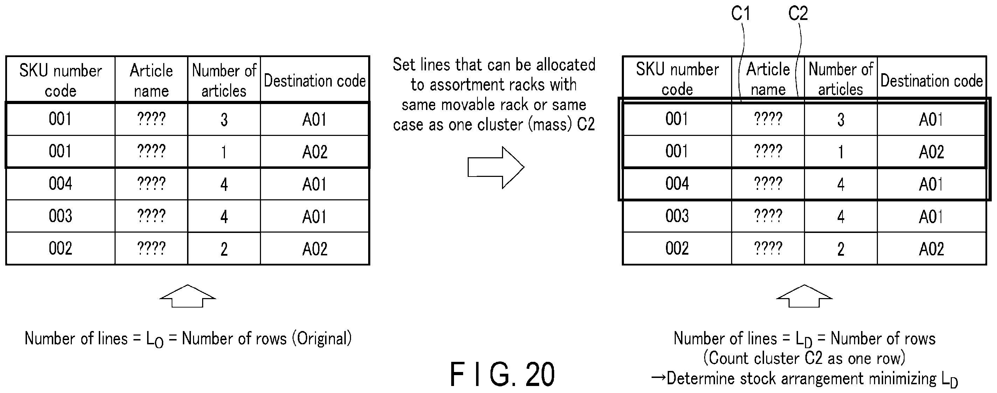

FIG. 18 is a flowchart illustrating an example of optimization processing of article storage according to an embodiment. FIG. 19 is a diagram illustrating an example of a first cluster (mass) formed of the same SKU according to an embodiment. FIG. 20 is a diagram illustrating an example of a second cluster (mass) pickable from the same movable rack or case according to an embodiment.

An object of optimization is to achieve minimization (minimization of traveling distance) of the number of times of carriage from the storage racks 3 to the picking stations 5 with the automated guided vehicles 23 and the case transfer units 25.

The maximum value of the number of times of carriage from the storage racks 3 to the picking stations 5 with the automated guided vehicles 23 and the case transfer units 25 in a day is the number of picking lines (=$L_O$) for a day. The processor 211 sorts the picking lines with the same SKU number codes (ST21), and sets a plurality of picking lines having the same SKU number code as one cluster (mass) C1 (=$L_S$) (ST22) (see FIG. 19) .

An upper limit is set for the number of lines forming one cluster C1. A plurality of trays for sorting destinations are arranged in the assortment racks 52a and 52b used in the DAS. A theoretical value of the upper limit of the number of lines forming one cluster C1 is an upper limit value of trays that can be arranged.

The processor 211 sorts the cluster C1 (=$L_S$) including the same destination code, to match with arrangement of the assortment racks 52a and 52b (ST23). The processor 211 sets lines that can be allocated to the assortment rack 52a or 52b with the same movable rack 311 or the same case 321 as one cluster (mass) C2 (=$L_D$) (ST24) (see FIG. 20).

The processor 211 determines a combination of the article arrangements X minimizing the cluster C2 (ST25). The processor 211 determines the combination of the article arrangements X by calculating the total number of combinations by round robin. As another example, the processor 211 determines the combination of the article arrangements X using a method such as deep learning.

The definition of optimization is supplemented herein. The definition of optimization is expressed by the following expression (1).

$$dL_D/dX=0 \quad ...(1)$$

The processor 211 searches for $L_D$ (the number of picking lines) having a minimum value and searches for the article arrangement X optimized for the storage racks 3. The processor 211 searches for minimal values of $L_D$ while varying the article arrangement X, and extracts the minimum value from the minimal values.

The definition of $L_D$ is as follows.

$L_D$= number of racks carried by automated guided vehicles/day + number of cases carried by case transfer units/day

For example, L may be defined as a value for a day, or article arrangement may be set to be statistically optimum on the basis of data for a certain long period (several days or one month).

$L_D$ is the sum of the number of racks carried by the automated guided vehicles to the picking stations in a day and the number of cases (or total moving distance) carried by the case transfer units to the picking stations in a day.

The definition of the article arrangement X of article i is as follows.

X = Σ3DAddress (i) (i: SKU number, JAN code or the like)

3DAddress indicates a three-dimensional address.

As the constraint conditions, a cluster of picking lines is generated within a range not exceeding the upper limit of the number of trays arranged in the assortment racks used in the DAS.

$D_{MAX}$ = upper limit value (for example, 16) of trays arranged in the assortment racks used in the DAS

$$D_{MAX} \geq DLi$$

$D_{Li}$: the total necessary number of trays in a case of processing the row $L_i$

Picking row number: 1, 2, 3 ... $L_i$ ...$L_D$

The present embodiment can provide a conveyance control apparatus, a warehouse management system, a conveyance control method, and a program to properly convey ordered articles in a warehouse storing articles in a plurality of types of storage members.

The warehouse management system S according to the present embodiment enables mixed arrangement of movable racks 311 and cases 321 and enhancement of storage efficiency and processing efficiency of articles.

The warehouse management system S according to the present embodiment enhances the storage efficiency of articles in the warehouse by arranging, in a mixed manner, the movable racks 311 in the storage region 31 in a lower portion of the storage rack 3 and the cases 321 in the storage region 32 in the upper portion of the storage rack 3. In addition, the ordered articles can be properly conveyed from the target position to the target position by operating the automated guided vehicles 23 and the case transfer units 25 in a mixed manner.

If the system depends only on the automated guided vehicles 23 of a single type, it is difficult to utilize the upper space of the warehouse. However, with the warehouse management system S, it is possible to utilize the upper space of the warehouse and enhance the storage efficiency of articles per unit area by using a plurality of types of vehicles, that is, automated guided vehicles 23 and case transfer units 25. In addition, enhancement of the storage efficiency of articles enables reduction in area of the warehouse, shortening of the moving distances of the automated guided vehicles 23 and the case transfer units 25, and enhancement of the processing efficiency of articles (the processing speed can be improved by concentration of articles).

If the system depends only on the cases 321, it is difficult to handle articles having heavy weight and articles having a large size. However, with the warehouse management system S, it is possible to increase articles that can be handled by using the movable racks 311 and the cases 321 in a mixed manner. In addition, even in a case where some articles with certain shape and/or weight cannot be stored in the case 321, the movable racks 311 can be used to store them because the structure of racks of the movable racks 311 is changeable. This structure can improve the stock efficiency.

In addition, the warehouse management system S can enhance the processing efficiency of articles by arrangement in which articles having low frequency of appearance are arranged in an upper portion of the storage region 32 and articles having high frequency of appearance in a lower portion of the storage region 32. The warehouse management system S can also enhance the processing efficiency of articles because it maximizes the picking hit rate of the movable racks 311 and the cases 321 and minimizes the total moving distances of the automated guided vehicles 23 and the case transfer units 25.

The program according to the present embodiment may be handed over in a state of being stored in an electronic device or handed over in a state of not being stored in an electronic device. In the latter case, the program may be handed over via a network or handed over in a state of being stored in a storage medium. The storage medium is a non-transitory physical medium. The storage medium is a computer-readable medium. The storage medium may be any medium as long as it is capable of storing a program and computer-readable, such as a CD-ROM and a memory card, and may have any form.

Some embodiments of the present invention have been described above, but the embodiments have been presented as examples, and are not intended to limit the scope of the invention. These novel embodiments can be carried out in other various forms, and various omissions, replacement, and changes are possible within a range not departing from the gist of the invention. These embodiments and/or modifications thereof are included in the scope and/or the gist of the invention, and included in the inventions recited in the claims and equivalent thereof.

**Claims**

1. A conveyance control apparatus comprising:

   a communication interface communicating with an automated guided vehicle control apparatus controlling automated guided vehicles based on a first conveyance instruction, a case transfer unit control apparatus controlling case transfer units based on a second conveyance instruction, and an external server transmitting an order including article identification information identifying articles;
   a memory storing management information including article identification information identifying the articles and storage destination identification information identifying storage destinations of the articles; and
   a processor acquiring the order via the communication interface, outputting, if a storage destination of a first article corresponding to first article identification information included in the order is a predetermined movable rack corresponding to first storage destination identification information, the first conveyance instruction including the first storage destination identification information and to convey the predetermined movable rack, and outputting, if a storage destination of a second article corresponding to second article identification information included in the order is a predetermined case corresponding to second storage destination identification information, the second conveyance instruction including the second storage destination identification information and to convey the predetermined case, based on the order and the management information.

2. The conveyance control apparatus according to claim 1, wherein

the processor acquires, via the communication interface, a first carry-out order requesting carrying out of the first article corresponding to the first article identification information and a second carry-out order requesting carrying out of the second article corresponding to the second article identification information, outputs a first carry-out instruction to carry out the predetermined movable rack from a predetermined position toward a picking station based on the first carry-out order and the management information, and outputs a second carry-out instruction to extract the predetermined case from a predetermined position and carry out the predetermined case toward the picking station based on the second carry-out order and the management information, and

the communication interface transmits the first carry-out instruction to the automated guided vehicle control apparatus, and transmits the second carry-out instruction to the case transfer unit control apparatus.

3. The conveyance control apparatus according to claim 1 or 2, wherein

the processor acquires, via the communication interface, a first carry-in order requesting carrying in of the first article corresponding to the first article identification information and a second carry-in order requesting carrying in of the second article corresponding to the second article identification information, selects the predetermined movable rack as a carry-in destination and generates a first carry-in instruction to carry in the predetermined movable rack in which the first article is stored at the picking station from the picking station toward a predetermined storage rack based on the first carry-in order and the management information, and selects the predetermined case as a carry-in destination and generates a second carry-in instruction to carry in the predetermined case in which the second article is stored at the picking station from the picking station toward a predetermined storage rack based on the second carry-in order and the management information, and

the communication interface transmits the first carry-in instruction to the automated guided vehicle control apparatus, and transmits the second carry-in instruction to the case transfer unit control apparatus.

4. The conveyance control apparatus according to claim 3, wherein

the management information includes article attribute information indicating at least one of a size, weight, and a frequency of appearance of the article, and

the processor selects the carry-in destination of the article based on the article attribute information.

5. The conveyance control apparatus according to claim 4, wherein the processor selects one of the predetermined movable rack arranged in a first storage region of a predetermined storage rack and the predetermined case arranged in a second storage region positioned above the first storage region, as the carry-in destination of the article, based on the article attribute information.

6. A warehouse management system comprising a movable rack conveyance apparatus, a case conveyance apparatus, and a conveyance control apparatus,

the movable rack conveyance apparatus including:

an automated guided vehicle conveying a movable rack; and

an automated guided vehicle control apparatus controlling the automated guided vehicle,

the automated guided vehicle control apparatus including:

a first communication interface communicating with the automated guided vehicle and the conveyance control apparatus; and

a first processor acquiring a first conveyance instruction including first storage destination identification information corresponding to a predetermined movable rack storing a first article and to convey the predetermined movable rack, via the first communication interface, and controlling the automated guided vehicle to convey the predetermined movable rack based on the first conveyance instruction,

the case conveyance apparatus including:

a case transfer unit conveying cases; and

a case transfer unit control apparatus controlling the case transfer unit,

the case transfer unit control apparatus including:

a second communication interface communicating with the case transfer unit and the conveyance control apparatus; and

a second processor acquiring a second conveyance instruction including second storage destination identification information corresponding to a predetermined case storing a second article and to convey the predetermined case, via the second communication interface, and controlling the case transfer unit to convey the predetermined case based on the second conveyance instruction, the conveyance control apparatus including:

a third communication interface communicating with the automated guided vehicle control apparatus, the case transfer unit control apparatus, and an external server transmitting an order including article identification information identifying articles;

a memory storing management information including article identification information identifying the articles and storage destination identification information identifying storage destinations of the articles; and

a third processor acquiring the order via the third communication interface, outputting the first conveyance instruction if a storage destination of the first article corresponding to first article identification information included in the order is the predetermined movable rack corresponding to first storage destination identification information, and outputting the second conveyance instruction if a storage destination of the second article corresponding to second article identification information included in the order is the predetermined case corresponding to second storage destination identification information, based on the order and the management information.

7. The warehouse management system according to claim 6, wherein

the third processor acquires, via the third communication interface, a first carry-out order requesting carrying out of the first article corresponding to the first article identification information and a second carry-out order requesting carrying out of the second article corresponding to the second article identification information, outputs a first carry-out instruction to carry out the predetermined movable rack from a predetermined position toward a picking station based on the first carry-out order and the management information, and outputs a second carry-out instruction to extract the predetermined case from a predetermined position and carry out the predetermined case toward the picking station based on the second carry-out order and the management information, and

the third communication interface transmits the first carry-out instruction to the automated guided vehicle control apparatus, and transmits the second carry-out instruction to the case transfer unit control apparatus.

8. The warehouse management system according to claim 6 or 7, wherein

the third processor acquires, via the third communication interface, a first carry-in order requesting carrying in of the first article corresponding to the first article identification information and a second carry-in order requesting carrying in of the second article corresponding to the second article identification information, selects the predetermined movable rack as a carry-in destination and generates a first carry-in instruction to carry in the predetermined movable rack in which the first article is stored at the picking station from the picking station toward a predetermined storage rack based on the first carry-in order and the management information, and selects the predetermined case as a carry-in destination and generates a second carry-in instruction to carry in the predetermined case in which the second article is stored at the picking station from the picking station toward a predetermined storage rack based on the second carry-in order and the management information, and

the third communication interface transmits the first carry-in instruction to the automated guided vehicle control apparatus, and transmits the second carry-in instruction to the case transfer unit control apparatus.

9. The warehouse management system according to claim 8, wherein

the management information includes article attribute information indicating at least one of a size, weight, and a frequency of appearance of the article, and

the third processor selects the carry-in destination of the article based on the article attribute information.

10. The warehouse management system according to claim 9, wherein the processor selects one of the predetermined movable rack arranged in a first storage region of a predetermined storage rack and the predetermined case arranged in a second storage region positioned above the first storage region, as the carry-in destination of the article, based on the article attribute information.

11. The warehouse management system according to claim 7, further comprising a plurality of picking stations, wherein

each of the picking stations includes a first area accepting the movable rack conveyed by the automated guided vehicle, a second area accepting the case conveyed by the case transfer unit, a third area for work of extracting the articles from the movable rack conveyed to the first area and work of extracting the articles from the case conveyed to the second area, and a fourth area in which assortment racks are arranged, and the assortment racks store assortments of the articles extracted from the movable rack and the articles extracted from the case, the automated guided vehicle control apparatus controls the automated guided vehicle to convey the predetermined movable rack from the predetermined storage rack to the first area of a predetermined picking station based on the first conveyance instruction, and
the case transfer unit control apparatus controls the case transfer unit to convey the predetermined case from the predetermined storage rack to the second area of a predetermined picking station based on the second conveyance instruction.

12. The warehouse management system according to claim 11, wherein

each of the picking stations includes the third area arranged in a center thereof, and includes the first, the second, and the fourth areas arranged around the third area,
the fourth areas of successive first and second picking stations are arranged in opposed positions,
the third processor transmits, to the case transfer unit control apparatus, an inter-rack conveyance instruction to convey the predetermined case of a first assortment rack in the fourth area of the first picking station to a second assortment rack in the fourth area of the second picking station, and the case transfer unit control apparatus controls the case transfer unit to convey the predetermined case of the first assortment rack to the second assortment rack based on the inter-rack conveyance instruction.

13. The warehouse management system according to claim 7, further comprising:

a movable rack picking station including a first area accepting the movable rack conveyed by the automated guided vehicle; and
a case picking station including a second area accepting the case conveyed by the case transfer unit, wherein the movable rack picking station includes a third area for work of extracting the articles from the movable rack conveyed to the first area, and a fourth area in which assortment racks storing assortments of the articles extracted from the movable rack and the articles extracted from the case are arranged, the case picking station includes a fifth area for work of extracting the articles from the case conveyed to the second area, and a sixth area in which assortment racks storing assortments of the articles extracted from the case are arranged,
the automated guided vehicle control apparatus controls the automated guided vehicle to convey the predetermined movable rack from the predetermined storage rack to the first area of the movable rack picking station, based on the first conveyance instruction, and
the case transfer unit control apparatus controls the case transfer unit to convey the predetermined case from the predetermined storage rack to the second area of the case picking station, based on the second conveyance instruction.

14. The warehouse management system according to claim 13, wherein

the movable rack picking station includes the third area arranged in a center thereof, and includes the first and the fourth areas arranged around the third area,
the case picking station includes the fifth area arranged in a center thereof, and the second and the sixth areas arranged around the fifth area,
the fourth and the sixth areas area arranged in opposed positions, and
the third processor transmits, to the case transfer unit control apparatus, an inter-rack conveyance instruction to convey the predetermined case of a first assortment rack in the sixth area of the case picking station to a second assortment rack in the fourth area of the movable rack picking station, and the case transfer unit control apparatus controls the case transfer unit to convey the predetermined case of the first assortment rack to the second assortment rack based on the inter-rack conveyance instruction.

15. A conveyance control method comprising:

acquiring an order including article identification information identifying articles, and acquiring management information including article identification information identifying the articles and storage destination identification information identifying storage destinations of the articles;

outputting, if a storage destination of a first article corresponding to first article identification information included in the order is a predetermined movable rack corresponding to first storage destination identification information, a first conveyance instruction including the first storage destination identification information and to convey the predetermined movable rack, and outputting, if a storage destination of a second article corresponding to second article identification information included in the order is a predetermined case corresponding to second storage destination identification information, a second conveyance instruction including the second storage destination identification information and to convey the predetermined case, based on the order and the management information; and

transmitting the first conveyance instruction to an automated guided vehicle control apparatus controlling an automated guided vehicle conveying the movable rack, and transmitting the second conveyance instruction to a case transfer unit control apparatus controlling a case transfer unit conveying the case.

16. A program to cause a computer to execute:

a step of acquiring an order including article identification information identifying articles, and acquiring management information including article identification information identifying the articles and storage destination identification information identifying storage destinations of the articles;

a step of outputting, if a storage destination of a first article corresponding to first article identification information included in the order is a predetermined movable rack corresponding to first storage destination identification information, a first conveyance instruction including the first storage destination identification information and to convey the predetermined movable rack, and outputting, if a storage destination of a second article corresponding to second article identification information included in the order is a predetermined case corresponding to second storage destination identification information, a second conveyance instruction including the second storage destination identification information and to convey the predetermined case, based on the order and the management information; and

a step of transmitting the first conveyance instruction to an automated guided vehicle control apparatus controlling an automated guided vehicle conveying the movable rack, and transmitting the second conveyance instruction to a case transfer unit control apparatus controlling a case transfer unit conveying the case.

17. A non-transitory computer-readable storage medium storing a program to cause a computer to execute:

acquiring an order including article identification information identifying articles, and acquiring management information including article identification information identifying the articles and storage destination identification information identifying storage destinations of the articles;

outputting, if a storage destination of a first article corresponding to first article identification information included in the order is a predetermined movable rack corresponding to first storage destination identification information, a first conveyance instruction including the first storage destination identification information and to convey the predetermined movable rack, and outputting, if a storage destination of a second article corresponding to second article identification information included in the order is a predetermined case corresponding to second storage destination identification information, a second conveyance instruction including the second storage destination identification information and to convey the predetermined case, based on the order and the management information; and

transmitting the first conveyance instruction to an automated guided vehicle control apparatus controlling an automated guided vehicle conveying the movable rack, and transmitting the second conveyance instruction to a case transfer unit control apparatus controlling a case transfer unit conveying the case.

FIG. 1

F I G. 2

F I G. 3

311

311C

F I G. 4

321

321C

F I G. 5

F I G. 6

21

Conveyance control apparatus 211

Processor

Acquisition unit — 2111

Generation unit — 2112

Output unit — 2113

212

ROM

214

Auxiliary storage device

213

RAM

215

Communication interface

Customer server
Automated guided
vehicle control apparatus
Case transfer unit
control apparatus

F I G. 7

F I G. 8

F I G. 9

EP 4 467 486 A1

~24

Conveyance control system
~241

Processor

~242
ROM

~244
Auxiliary storage device

~243
RAM

~245
Communication interface

Conveyance control apparatus
Case transfer unit

F I G. 10

F I G. 11

~25

Case transfer unit (CTU)

~251
Processor

~252
ROM

~254
Auxiliary storage device

~253
RAM

~255
Communication interface ← Case transfer unit control apparatus

~2561
Tires

~256
Drive unit (such as motor)

~257
Sensing device

~2562
Extraction mechanism

~258
Battery

~259
Charging mechanism

F I G. 12

PSE2

5

Picking station

CTU 25

321

51

Movable rack picking position

Movable rack standby position

Movable rack standby position

Movable rack standby position

Movable rack standby position

PSE1

DAS rack 52a

CTU

DAS rack 52b

PSE3

PSE4

PSE2

Picking station

CTU 25

321

51

DAS rack 52a

DAS rack 52b

Movable rack picking position

Movable rack standby position

Movable rack standby position

Movable rack standby position

Movable rack standby position

PSE3

PSE4

PSE1

5

F I G. 13

5a -- Movable rack picking station

Case picking station

-- 5b

CTU -- 25

51

321

| Movable rack picking position |

| Movable rack standby position | Movable rack standby position |

DAS rack

52a

CTU

DAS rack

52a

DAS rack

| Movable rack standby position | Movable rack standby position |

DAS rack

52b

DAS rack

52b

PSE1

PSE4

PSE3

PSE6

PSE5

F I G. 14

| Destination code | Number of articles | Article name | Size (three-side size)[mm] | SKU number code |
|:---:|:---:|:---:|:---:|:---:|
| A01 | 3 | xxx | 15 × 12 × 330 | 001 |
| A02 | 1 | xxx | 32 × 45 × 50 | 008 |
| A03 | 4 | xxx | 610 × 230 × 100 | 003 |
| A01 | 4 | xxx | 800 × 600 × 100 | 007 |
| A02 | 2 | xxx | 10 × 10 × 10 | 008 |

F I G. 15

START

ST11
Acquire order list and
management information

ST12
Is storage
destination is movable
rack? → No

Yes

ST13
Generate first conveyance signal
to be transmitted to automated
guided vehicle control apparatus

ST14
Generate second conveyance signal
to be transmitted to case transfer
unit control apparatus

ST15
Output first conveyance signal

ST16
Output second conveyance signal

ST17
Has
processing of all articles
finished? → No

Yes

END

F I G. 16

EP 4 467 486 A1

|  | Indispensable conditions | Optimization conditions |
|---|---|---|

Articles with light weight (30 kg or less)

Articles with small size (example: case size: MAX 600 × 400 × 330 mm)

It is indispensable that all three sides of article size is equal to or less than case size

High
· Articles with low picking frequency
· Articles with low combination frequency

· Articles with high picking frequency
· Articles with high combination
Low frequency

321

32

3

311

31

Articles with heavy weight (exceeding 30 kg)

Articles with large size (example: case size: MAX 600 × 400 × 330 mm)

Even articles equal to or larger than case size above can be stored

Provide priority to articles with high frequency of picking of rows in combination in one call (in one destination)

F I G. 17

```
        ( START )
            |
            | ___ST21
            v
  +---------------------------+
  |   Sort picking lines with |
  |   same SKU number code    |
  +---------------------------+
            |
            | ___ST22
            v
  +---------------------------+
  |  Set lines of same SKU number |
  |  code as one cluster (mass) C1 |
  +---------------------------+
            |
            | ___ST23
            v
  +---------------------------+
  | Sort cluster C1 (Ls) to match with |
  | arrangement of assortment racks    |
  +---------------------------+
            |
            | ___ST24
            v
  +---------------------------+
  |  Set lines that can be allocated to  |
  |  assortment rack in same movable rack |
  |  or same case as one cluster (mass) C2 |
  +---------------------------+
            |
            | ___ST25
            v
  +---------------------------+
  |  Determine combination of article   |
  | arrangements X minimizing cluster C2(LD) |
  +---------------------------+
            |
            v
         (  END  )
```

F I G. 18

| SKU number code | Article name | Number of articles | Destination code |
|---|---|---|---|
| 001 | ???? | 3 | A01 |
| 002 | ???? | 2 | A02 |
| 003 | ???? | 4 | A01 |
| 004 | ???? | 4 | A01 |
| 001 | ???? | 1 | A02 |

⇧

Number of lines = $L_O$ = Number of rows (Original)

Set lines of same SKU number code as one cluster (mass) C1

⇨

C1

| SKU number code | Article name | Number of articles | Destination code |
|---|---|---|---|
| 001 | ???? | 3 | A01 |
| 001 | ???? | 1 | A02 |
| 004 | ???? | 4 | A01 |
| 003 | ???? | 4 | A01 |
| 002 | ???? | 2 | A02 |

⇧

Number of lines = $L_S$ = Number of rows (Count cluster C1 as one row)

F I G. 19

EP 4 467 486 A1

| SKU number code | Article name | Number of articles | Destination code |
|---|---|---|---|
| 001 | ???? | 3 | A01 |
| 001 | ???? | 1 | A02 |
| 004 | ???? | 4 | A01 |
| 003 | ???? | 4 | A01 |
| 002 | ???? | 2 | A02 |

Number of lines = $L_O$ = Number of rows (Original)

Set lines that can be allocated to assortment racks with same movable rack or same case as one cluster (mass) C2

C1    C2

| SKU number code | Article name | Number of articles | Destination code |
|---|---|---|---|
| 001 | ???? | 3 | A01 |
| 001 | ???? | 1 | A02 |
| 004 | ???? | 4 | A01 |
| 003 | ???? | 4 | A01 |
| 002 | ???? | 2 | A02 |

Number of lines = $L_D$ = Number of rows (Count cluster C2 as one row)
→Determine stock arrangement minimizing $L_D$

F I G. 20

## INTERNATIONAL SEARCH REPORT

| | International application No. |
|---|---|
| | **PCT/JP2023/001738** |

**A.    CLASSIFICATION OF SUBJECT MATTER**

*B65G 1/00*(2006.01)i; *B65G 1/10*(2006.01)i; *B65G 1/137*(2006.01)i
FI:    B65G1/137 A; B65G1/00 501C; B65G1/10 Z

According to International Patent Classification (IPC) or to both national classification and IPC

**B.    FIELDS SEARCHED**

Minimum documentation searched (classification system followed by classification symbols)

B65G1/00; B65G1/10; B65G1/137

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)


**C.    DOCUMENTS CONSIDERED TO BE RELEVANT**

| Category* | Citation of document, with indication, where appropriate, of the relevant passages | Relevant to claim No. |
|---|---|---|
| X | JP 2022-508567 A (HAI ROBOTICS CO., LTD.) 19 January 2022 (2022-01-19) paragraphs [0005]-[0025], [0034]-[0110], fig. 1 | 1-11, 13, 15-17 |
| Y | | 12, 14 |
| Y | JP 2020-505295 A (ZHEJIANG GUOZI ROBOTICS CO., LTD.) 20 February 2020 (2020-02-20) paragraphs [0018]-[0025], [0058]-[0079], [0336]-[0347], fig. 1, 2, 4 | 12, 14 |
| A | JP 2017-141102 A (HITACHI, LTD.) 17 August 2017 (2017-08-17) | 1-17 |
| A | JP 2020-515482 A (SHANGHAI QUICKTRON INTELLIGENT TECHNOLOGY CO., LTD.) 28 May 2020 (2020-05-28) | 1-17 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 March 2023** | **04 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2023/001738**

| Patent document cited in search report | | | Publication date (day/month/year) | Patent family member(s) | | | Publication date (day/month/year) |
|---|---|---|---|---|---|---|---|
| JP | 2022-508567 | A | 19 January 2022 | US 2022/0002084 A1 paragraphs [0006]-[0071], [0100]-[0183], fig. 1 EP 3915904 A1 CN 109592280 A KR 10-2021-0098539 A | | | |
| JP | 2020-505295 | A | 20 February 2020 | EP 3653541 A1 paragraphs [0018]-[0025], [0058]-[0079], [0337]-[0348], fig. 1, 2, 4 CN 108750521 A | | | |
| JP | 2017-141102 | A | 17 August 2017 | US 2018/0265297 A1 CN 108137232 A | | | |
| JP | 2020-515482 | A | 28 May 2020 | CN 109625747 A | | | |

Form PCT/ISA/210 (patent family annex) (January 2015)

**EP 4 467 486 A1**

**Patent documents cited in the description**

- JP 6961774 B